Europäisches Patentamt

European Patent Office

Office européen des brevets

(11) Veröffentlichungsnummer: **0 267 310
B1**

(12) **EUROPÄISCHE PATENTSCHRIFT**

(45) Veröffentlichungstag der Patentschrift:
25.04.90

(21) Anmeldenummer: 86115623.0

(22) Anmeldetag: 11.11.86

(51) Int. Cl.⁴: **A21D 13/08**

(54) Verfahren zum Herstellen von Kuchenmassen für haltbare süsse Backwaren.

(43) Veröffentlichungstag der Anmeldung:
18.05.88 Patentblatt 88/20

(45) Bekanntmachung des Hinweises auf die Patenterteilung:
25.04.90 Patentblatt 90/17

(84) Benannte Vertragsstaaten:
AT BE CH DE ES FR GB GR IT LI LU NL SE

(56) Entgegenhaltungen:
EP-A- 0 098 642
EP-A- 0 136 158
EP-A- 0 191 693

CHEMIE, MIKROBIOLOGIE, TECHNOLOGIE DER
LEBENSMITTEL, Nr. 5, 1976, Seiten 20-26; G. CERNY:
"Möglichkeiten zur Verlängerung der mikrobiellen
Stabilität von Lebensmitteln mit verringerter
Gleichgewichtsfeuchtigkeit dargestellt am Modell
Sandkuchen"

(73) Patentinhaber: INANAEHRMITTEL Bruno Pietschmann
GmbH, Siemensstrasse 20, D-2084 Rellingen 1(DE)

(72) Erfinder: Pietschmann, Bruno, Siemensstrasse 20,
D-2084 Rellingen 1(DE)

(74) Vertreter: Fleck, Thomas, Dr.Dipl.-Chem. et al,
Patentanwälte Raffay, Fleck & Partner
Postfach 32 32 17, D-2000 Hamburg 13(DE)

**Beschreibung**

Die vorliegende Erfindung betrifft ein Verfahren zum Herstellen von Kuchenmassen für haltbare süße Backwaren unter Verwendung von Weizenmehl, -stärke, Margarine und/oder Butter, Vollei sowie Zucker und Wasser, bei dem ggf. Backemulgatoren, Backpulver, Aromastoffe und Salz etc. in unterschiedlichen Mengenverhältnissen und Kombinationsvarianten eingesetzt werden und anschließend die entstandene Masse gründlich vermischt und/oder aufgeschlagen und/oder gerührt wird.

Derartige Verfahren sind im Stand der Technik mit den unterschiedlichsten Rezepturen bekannt. Nachteilig hat sich jedoch immer wieder bei diesen Massen bzw. Teigen und den daraus hergestellten fertigen Backwaren bzw. Kuchen die zu kurze Haltbarkeit bemerkbar gemacht, die sich durch verstärktes mikrobielles Wachstum, z.B. Schimmelbildung zeigt. Der Stand der Technik ist, dieses Problem durch Konservierungsmittel zu lösen. So werden z.B. in der DE-AS 2 333 142 und in der DE-OS 3 137 559 Verfahren zum Konservieren von mit Hefe oder Sauerteig getriebenem Brot und Backwaren beschrieben, die Sorbinsäure bestimmter Korngröße als Konservierungsmittel einsetzen. Das EG-Recht z.B. untersagt jedoch die Verwendung von Konservierungsstoffen für Kuchen. In einigen Fällen ist nur die Konservierung von Kuchenfüllungen erlaubt. Auch ist eine Verschlechterung des Kuchengeschmacks und der Kuchenqualität durch Zusatz von Konservierungsstoffen hinreichend bekannt. Ein scharfer Geschmack und ein Kratzen im Hals werden vom Verbraucher als nachteilig angesehen und entsprechen auch nicht seiner Erwartung, da Konservierungsstoffe aus ernährungsphysiologischen Gründen weitgehend abgelehnt werden.

Der weitere Stand der Technik gemäß EP-A 136 158 und EP-A 98 642 sowie EP-A 191 693 bezieht sich insgesamt auf "cookies", die harte Dauerbackwaren darstellen und $a_w$-Werte geringer als 0,5 besitzen, wie dieses bei "cookies" selbstverständlich ist. Im übrigen treten bei "cookies" wegen des hohen Zuckergehaltes keine Konservierungsprobleme auf.

Der Erfindung liegt deshalb die Aufgabe zugrunde, das eingangs genannte Verfahren derart zu verbessern, daß es ohne die üblichen Konservierungsstoffe, wie z.B. Sorbinsäure, Propionsäure und Derivate sowie deren Ester und Kalium-, Calcium- und Natriumsalze, auskommt und dennoch eine haltbare Backware oder Kuchen liefert, bei der das mikrobielle Wachstum, insbesondere die Schimmelpilzbildung, wesentlich unterdrückt bzw. völlig vermieden wird.

Diese Aufgabe wird durch das im Anspruch 1 gekennzeichnete Verfahren gelöst.

Die Erfindung beschreibt also ein Verfahren einer Berechnungs- und Herstellungsmethode zur Verzögerung bzw. Vermeidung eines mikrobiellen Verderbs süßer Backwaren durch Absenkung der Wasseraktivität ohne Verwendung üblicher chemischer Konservierungsmittel. Es beruht auf der Einstellung eines bestimmten Verhältnisses der Teile Wasser zu Teilen Zucker. Dabei können jegliche Rohstoffe eingesetzt werden, die in der Lebensmittel-Kennzeichnungsverordnung gemäß § 6 Abs. Nr. 1 und Nr. 2 angeführt sind.

Ferner ermöglicht die Erfindung, saftigere Backwaren oder Kuchen als bisher herzustellen, indem man eine stabilisierte oder backstabile Zuckerlösung in den beanspruchten Verhältnis-Zahlen zusetzt, ohne daß die Kuchen der Gefahr einer Schimmelpilzbildung ausgesetzt sind.

Die Festlegung bzw. Berechnung des Wasserhaushaltes und die entsprechende Einstellung der Verhältnisteile Wasser und Zucker sind die erfindungsgemäße Voraussetzung für weitere back-technologische Verbesserungen der Backwaren, wie z.B. Verbesserung der Saftigkeit, ohne Gefahr eines Verderbs durch Schimmelpilzbildung.

In der Technologie der Bäckerei und Konditorei werden Mikroorganismen bekanntlich als Säurebildner (Milch- und Essigsäure), als Treibmittel (Hefe), sowie Aromenbildner (Sauerteig) eingesetzt.

Mikroorganismen sind aber auch für den Verderb der Lebensmittel verantwortlich.

Für diese Lebensvorgänge der Mikroorganismen ist Wasser unerläßlich. Es fördert chemische Umsetzungen und ist an Hydrolysen als Reaktionspartner beteiligt. Nicht alles in einem Lebensmittel vorhandene Wasser ist aber für die Nutzung durch Mikroben verfügbar. Wird Wasser durch osmotische Kräfte oder durch Adsorption an eingelöste Nahrungsmittelbestandteile gebunden, so kann es von Mikroben nicht genutzt werden. Wasserentzug oder -bindung, z. B. durch Erhöhung der Kochsalz- oder Zuckerkonzentration führt daher zur Hemmung vieler chemischer Reaktionen und zur Hemmung des Wachstums von Mikroorganismen und damit bei einer Reihe von Lebensmitteln zu einer erhöhten Lagerstabilität.

Das Maß für das nichtgebundene Wasser, das den Mikroorganismen erst die Vermehrung möglich macht, wurde als "Wasseraktivität" - $a_w$ (activity of water) definiert. Sie wird ausgedrückt durch den Quotienten:

$$a_w = \frac{p}{p_o}$$

Legende: p = Dampfdruck des Lebensmittels
$p_o$ = Dampfdruck des Wasser

Die Wasseraktivität kann also maximal den Wert 1,0 annehmen. Sie kann in dichtverschlossenen Behältnissen gemessen werden, in denen sich Raumfeuchte und Feuchte des Lebensmittels ausgleichen. Die relative Feuchtigkeit der Atmosphäre ist dann gleich dem 100-fachen $a_w$-Wert:

r.F.(%) = $a_w$. 100

Durch Messungen lassen sich daher für jedes Lebensmittel charakteristische Sorptionsisothermen unter verschiedenen Bedingungen ermitteln.

Außer bei Brot kann eine pH-Absenkung (Ansäuerung) zur Verminderung der mikrobiellen und der Wasseraktivität wohl nur in speziellen Fällen angewandt werden.

In Backwaren, insbesondere bei Feinbackwaren, kann aber nicht allgemein eine Reduzierung des Wassergehaltes vorgenommen werden, ohne daß charakteristische Eigenschaften verloren gehen, die durch einen gewissen Wassergehalt bewirkt werden, der die Struktur und Konsistenz, Geschmack und Feeling usw. der Backware entscheidend bestimmt, z.B. die Saftigkeit.

Andererseits sind die Bindungsverhältnisse des Wassers in Feinbackwaren aufgrund der Vielfalt der gelösten Stoffe und deren strukturelle Bindung bzw. Adsorption an verschiedene Inhaltsstoffe, wie Eiweiße und Kohlenhydrate und dem Grade der Immobilisierung des Wassers außerordentlich komplex, was erfindungsgemäß berücksichtigt wird.

Folgende vorteilhafte Weiterbildungen des erfindungsgemäßen Verfahrens sind möglich:

1. Erhöhung der Gesamtfeuchte ohne eine nachteilige Veränderung der Teilwerte Wasser und Zucker, also durch keine Erhöhung der Wasseraktivität. Dadurch, daß keine Veränderung der Teilwerte vorgenommen wird, besteht keine Gefahr eines Verderbs durch Schimmelpilzbildung. Dies ist durch die Herstellung eines Wasser-Zucker-Gels im Verhältnis 600 g Zucker zu 400 g Wasser möglich. Die Stabilisierung erfolgt durch einen Feuchtigkeitsstabilisator, z.B. auf Basis modifizerte Stärke und natürlicher Stabilisatoren, der in einer Menge von etwa 100 g dazu benötigt wird. Die Herstellung geht wie folgt vor sich: Zucker und Feuchtigkeitsstabilisator werden trocken vermischt und in das Wasser ein- und glattgerührt. Die Anwendung dieses Produktes geschieht folgendermaßen: auf die vorher berechnete und eingestellte Kuchenmasse werden 3 – 10% dieses Gels auf das Gesamtgewicht der Masse zugegeben. Dadurch bekommt man den sogenannten (weichen) Soft-Kuchen. Die Zugabemenge des Gels limitiert sich dort, wo die Backware Wasserstreifen bekommt, d. h. wenn keine Gerüstbildung in der Gebäckkrume mehr möglich ist.

2. Das "Altwerden" von Kuchen, entspricht der Rekristallisierung des Stärkegels und des gelösten Zuckers, was sich durch ein Rauh- und Hartwerden der Kuchenkrume bemerkbar macht. Die beschriebene Methode verzögert die Rekristallisierung. Sie hält die anteiligen Mengen Stärkegel, Wasser und Zucker im Kuchen in einer gelösten Form, so daß das durch Mikroben nutzbare freie Wasser weder mobil noch verfügbar ist. Die Dosierung des Feuchtigkeitsstabilisators wird auf das Gesamtgewicht der Kuchenmasse berechnet und die Höhe des Zusatzes zur jeweiligen Masse in der Praxis ermittelt. Durch einfache Versuche lassen sich Höchstmengenzusätze ermitteln. Eine Überdosierung verhindert die Gerüstbildung. Dadurch wird das Volumen des Kuchens geringer und es zeigen sich Wasserstreifen im Kuchen. Da aber eine maximale Saftigkeit angestrebt wird, muß der Grenzwert auch wieder durch Backversuche ermittelt werden.

Eine exakt nach dem Verfahren durchgeführte Rezeptgestaltung ermöglicht die Herstellung von Dauerbackwaren mit einer guten Langzeithaltbarkeit in Bezug auf die Saftigkeit und die Verhinderung von Schimmelpilzwachstum. Um eine Langzeithaltbarkeit von Backwaren zu erreichen, ist auch optimale Hygiene beim Kühlen und Verpacken notwendig. Wichtig ist es, die Verpackungsmaschinen und die Folien zu erden, damit elektrostatische Aufladungen vermieden werden. Aufgeladene Folien ziehen Schimmelsporen an und werden dadurch vermehrt in die Verpackung gebracht. Gefilterte, keimfreie Luft mit leichtem Überdruck in den Verpackungsräumen wäre optimal. Da die Voraussetzungen für ein keimfreies Kühlen und Verpacken der Kuchen nicht immer 100%ig gegeben sind, besteht die Möglichkeit durch bestimmte Zutaten und Zusatzstoffe, die keine chemischen Konservierungsmittel sind, Abhilfe zu schaffen. Folgende Möglichkeiten sind dazu geeignet, Schimmelpilzwachstum auf verpacktem Kuchen weitgehend zu verzögern und zu vermeiden:

1. Austausch der Luft in der Verpackung durch Stickstoff
2. Entfernung der Luft und Einsprühen von Äthyl-Alkohol in die Verpackung.

Zum Aufschlagen von Massen dienen übliche Backemulgatoren. Diverse Backpulvertypen sind einsetzbar.

Durch die zusätzliche Anreicherung der Kuchen mit Zuckerstoffen können beim Lösen der Kuchen aus den Formen Probleme entstehen. Für problemlose Lösung aus den Formen empfehlen sich Trennemulsionen mit einem Fettgehalt von 60 bis 80%.

Nachfolgend werden Beispiele des erfindungsgemäßen Verfahrens zum Festlegen des zuzusetzenden Zuckeranteils angegeben, die eine exakte Bestimmung des entsprechenden Wasseranteils im Kuchen nach Gewichten, Prozenten, Teilen und Verhältnissen ermöglichen, wodurch die Größenordnung der Wasseraktivität berechenbar wird.

Erläuterung der Begriffe

Berechnung des Rezeptes

(1) Massen-Gesamtgewicht
(2) Wasser-Gesamtgewicht
(3) Zucker-Gesamtgewicht
(4) Prozent-Anteil von Wasser im (1) Massen-Gesamtgewicht vor dem Backen
(5) Prozent-Anteil von Zucker im (1) Massen-Gesamtgewicht vor dem Backen

Bestimmung der Parameter für die Berechnungen

Wasserverluste durch Backen, Kühlen und Lagern

(6) Backverlust in Gramm
(7) Backverlust in Prozent
(8) Kuchen - Gewicht nach dem Backvorgang (festgestellt nach dem Verlassen des Ofens)
(9) Auskühlverlust in Gramm
(10) Auskühlverlust in Prozent
(11) Massen-Gesamtgewichtsverlust = Wasserverlust
(12) Kuchen-Gewicht vor dem Verpacken
(13) Massen-Gesamtgewichtsverlust in Prozent
(14) Wasser-Gesamtgewichtsverlust in Prozent
(15) Austrocknungsverlust

Wasser und Zucker im Kuchen vor dem Verpacken in Gewichten, Prozenten, Teilen und Verhältnissen

(16) restlicher gewichtsmäßiger Wasser - Anteil im Kuchen
(17) Wasser-Anteil im Kuchen in Prozent
(18) Zucker-Anteil im Kuchen in Prozent
(19) Zucker/Wasser-Gesamtgewichtsanteil im Kuchen
(20) Zucker-Anteil zum Zucker-Wasser-Gesamtgewicht im Kuchen in Prozent
(21) Wasser-Anteil zum Zucker-Wasser-Gesamtgewicht im Kuchen in Prozent
(22) Zucker im Verhältnis zu 100 Teilen Wasser
(23) 100 Teile Wasser im Verhältnis zu Teilen Zucker
(24) Wasser-Zucker-Gesamtmenge in Teilen
(25) $a_w$-Wert

Definition von Massen

Als Massen werden im wesentlichen backfähige Schäume, Cremes oder viskose Kompositionen von Zutaten und Zusatzstoffen durch Rühren und Aufschlagen als Basis von süßen Backwaren mit chemischer oder physikalischer Lockerung (z.B. Backpulver) bezeichnet. Massen können auch gemischt und abgeröstet werden.
Überschneidungen zwischen den typischen Merkmalen von Teigen und Massen sind in Grenzfällen durchaus möglich, z.B. bei Spritzmürbteigen oder Waffelmassen.
Als Rohstoffe werden hauptsächlich die in der Lebensmittel-Kennzeichnungsverordnung (LMKV) Anlage 1 zu § 6 Abs. 4 Nr. 1 aufgeführten Zutaten eingesetzt. Meist werden einige der in Anlage 2 zu § 6 Abs. 4 Nr. 2 aufgeführten Zusatzstoffe mitverwendet.
Analoge lebensmittelrechtliche Regelungen bestehen in den Ländern der EG, in den USA usw. und in anderen Ländern.

Berechnung: (1) Massen-Gesamtgewicht

Addition der gewichtmäßigen Anteile, der in den Rezepturen angeführten Zutaten und Zusatzstoffen.

4

## Rezeptbeispiel 1:

Zutaten/Zusatzstoffe

|         |   |                    |
|---------|---|--------------------|
| 900 g   |   | Margarine          |
| 400 g   |   | Weizenstärke       |
| 800 g   |   | Weizenmehl         |
| 1000 g  |   | Zucker             |
| 800 g   |   | Vollei             |
| 300 g   |   | Wasser             |
| 4200 g  | = | Massengesamtgewicht |

## Wasseranteil in % in Zutaten und Zusatzstoffen

| Wasser       | 100 |
|--------------|-----|
| Vollei       | 80  |
| Mehl         | 15  |
| Stärke       | 15  |
| Margarine    | 20  |
| Fett 100 %ig | 0   |
| Zucker       | 0   |

Sonstige Zutaten/Zusatzstoffe

Bei weiteren Zutaten und Zusatzstoffen wie z.B. Backemulgatoren, Backtriebmitteln, Salz etc. ist der prozentuale Wassergehalt zu ermitteln.

Berechnung der Gewichtsanteile von Wasser und des (2) Wassergesamtgewicht

berechnet aus den gewichtsmäßigen Anteilen der Zutaten oder Zusatzstoffe multipliziert mit einem Faktor, gebildet aus dem Prozent-Anteil des Wassers der anteiligen Zutaten oder Zusatzstoffe, dividiert durch 100 und Aufaddierung

| Zutaten/Zusatzstoffe | | %tualer Wassergehalt | Faktor | gewichtsmäßiger Wassergehalt |
|---|---|---|---|---|
| 900 g | Margarine | 20 | $\frac{20}{100} = 0,2$ | 180 g |
| 400 g | Weizenstärke | 15 | $\frac{15}{100} = 0,15$ | 60 g |
| 800 g | Weizenmehl | 15 | $\frac{15}{100} = 0,15$ | 120 g |
| 1000 g | Zucker | 0 | $\frac{0}{100} = 0$ | 0 g |
| 800 g | Vollei | 80 | $\frac{80}{100} = 0,8$ | 640 g |
| 300 g | Wasser | 100 | $\frac{100}{100} = 1$ | 300 g |

4200 g = Massengesamtgewicht (1)          (2) Wassergesamtgewicht = 1300 g

(3) Zucker-Gesamtgewicht

entspricht der in der Rezeptur angegebenen Menge
Rezeptbeispiel: 1000 g Zucker

Berechnung: (4) Prozent-Anteil von Wasser im (1) Massen-Gesamtgewicht vor dem Backen

$$\frac{\text{Wasser-Gesamtgewicht (2) x 100}}{\text{Massen-Gesamtgewicht vor dem Backen (1)}} = \% \text{ Wasser (4)}$$

$$\text{Rezeptbeispiel:} \quad \frac{1300 \text{ (2) x } 100}{4200 \text{ (1)}} = 30,95 \% \text{ Wasser (4)}$$

Berechnung: (5) Prozent-Anteil von Zucker im (1) Massen-Gesamtgewicht vor dem Backen

$$\frac{\text{Zuckergesamtgewicht (3) x 100}}{\text{Massengesamtgewicht vor dem Backen (1)}} = \% \text{ Zucker (5)}$$

$$\text{Rezeptbeispiel:} \quad \frac{1000 \text{ (3) x } 100}{4200 \text{ (1)}} = 23,81 \% \text{ Zucker (5)}$$

Berechnung: (6) Backverlust in Gramm

gewichtsmäßiger Verlust der Masse während des Backvorganges

Massengesamtgewicht (1)

– Gewicht nach dem Backvorgang (festgestellt nach dem Verlassen des Ofens) (8)

= Backverlust in Gramm (6)

Rezeptbeispiel:      4200 g (1)

              – 3835 g (8)

              =   365 g   Backverlust (6)

Berechnung: (7) Backverlust in Gramm

ist der prozentuale Verlust der Masse durch den Backvorgang

$$\frac{\text{Backverlust in g (6) x 100}}{\text{Massengesamtgewicht (1)}} = \text{\% Backverlust (7)}$$

$$\text{Rezeptbeispiel:} \quad \frac{365 \ (6) \ x \ 100}{4200 \ (1)} = 8.69 \ \text{\% Backverlust (7)}$$

Berechnung: (9) Auskühlverlust in Gramm

gewichtsmäßiger Verlust des Kuchens durch Wasserverlust beim Auskühlen bis zum Zeitpunkt des Verpackens

Kuchen-Gewicht nach dem Backvorgang (festgestellt nach Verlassen des Ofens) (8)

– Kuchen-Gewicht vor dem Verpacken (12)

= Auskühlverlust (9)

Rezeptbeispiel:      3835 g   (8)

              – 3770 g (12)

              =    65 g   Auskühlverlust (9)

Berechnung: (10) Auskühlverlust in Prozent

prozentualer Verlust des Kuchens durch Wasserverlust beim Auskühlen, bis zum Zeitpunkt des Verpackens

$$\frac{\text{Auskühlverlust in g (9) x 100}}{\text{Kuchen-Gewicht nach dem Backen (8)}} = \text{\% Auskühlverlust (10)}$$

$$\text{Rezeptbeispiel:} \quad \frac{65 \ (9) \ x \ 100}{3835 \ (8)} = 1{,}69 \ \text{\% Auskühlverlust (10)}$$

Berechnung: (11) Massen-Gesamtgewichtsverlust = Wasserverlust

Backverlust der Masse in Gramm (6)

+ Auskühlverlust in Gramm (9)

= Massen – Gesamtgewichtsverlust = Wasserverlust (11)

Rezeptbeispiel:   365 g (6)

+  65 g (9)

= 430 g  Massen – Gesamtgewichtsverlust  =  Wasserverlust (11)

Berechnung: (12) Kuchengewicht vor dem Verpacken

Massen – Gesamtgewicht (1)

–  Massen – Gesamtgewichtsverlust = Wasserverlust (11)

=  Kuchen – Gewicht vor dem Verpacken (12)

Rezeptbeispiel:   4200 g  (1)

–   430 g (11)

= 3770 g  Kuchen – Gewicht vor dem Verpacken (12)

Berechnung: (13) Massen-Gesamtgewichtsverlust in Prozent

bezogen auf das Kuchen-Gewicht vor dem Verpacken (12)

$$\frac{\text{Massen-Gesamtgewichtsverlust (11) x 100}}{\text{Kuchen-Gewicht vor dem Verpacken (12)}} = \text{\% Massen – Gesamtgewichts-verlust (13)}$$

Rezeptbeispiel:  $\dfrac{430\ (11)\ x\ 100}{3770\ (12)} = 11{,}41$ % Massen – Gesamtgewichtsverlust (13)

Berechnung: (14) Wasser-Gesamtgewichtsverlust in Prozent

bezogen auf das Wasser-Gesamtgewicht (2)

$$\frac{\text{Massen-Gesamtgewichtsverlust (11) x 100}}{\text{Wasser- Gesamtgewicht (2)}} = \text{\% Wasser – Gesamtgewichtsverlust (14)}$$

Rezeptbeispiel:  $\dfrac{430\ (11)\ x\ 100}{1300\ (2)} = 33{,}08$ % Wasser – Gesamtgewichtsverlust (14)

(15) Austrocknungsverlust

Der Austrocknungsverlust ist der Verlust von Feuchtigkeit des verpackten Kuchens in festzulegenden Zeiträumen, die täglich, wöchentlich und/oder monatlich zu messen sind.

Dieser ist durch den Backwarenhersteller selbst zu ermitteln, um Qualitäten von Verpackungsfolien zu testen und zu bestimmen.

Berechnung: (16) restlicher, gewichtsmäßiger Wasser-Anteil im Kuchen vor dem Verpacken

Wasser - Gesamtgewicht (2)

- Massen - Gesamtgewichtsverlust (11)

= Wasser - Anteil im Kuchen (16)

Rezeptbeispiel:     1300 g  (2)

                  -   430 g  (11)

                  =   870 g   restlicher Wasser - Anteil im Kuchen vor dem Verpacken (16)

Berechnung: (17) Wasser-Anteil im Kuchen in Prozent

$$\frac{\text{restlicher, gewichtsmäßiger Wasser-Anteil (16) x 100}}{\text{Kuchen-Gewicht vor dem Verpacken (12)}} = \text{\% Wasser - Anteil im Kuchen (17)}$$

Rezeptbeispiel: $\dfrac{870\ (16)\ x\ 100}{3770\ (12)}$ = 23,08 % Wasser - Anteil im Kuchen (17)

Berechnung: (18) Zucker-Anteil im Kuchen in Prozent

$$\frac{\text{Zucker-Gesamtgewicht (3) x 100}}{\text{Kuchen-Gewicht vor dem Verpacken (12)}} = \text{\% Zucker - Anteil im Kuchen (18)}$$

Rezeptbeispiel: $\dfrac{1000\ (3)\ x\ 100}{3770\ (12)}$ = 26,53 % Zucker - Anteil im Kuchen (18)

Berechnung: (19) Zucker/Wasser-Gesamtgewichtsanteil im Kuchen vor dem Verpacken

9

| Zutaten/ Zusatzstoffe | Gewichts-Anteil Zutaten/Zusatzstoffe | Wasser-Anteil in % | Wasser-gewicht | Zucker-gewicht |
|---|---|---|---|---|
| Margarine | 900 g | 20 | 180 g | 0 g |
| Weizenstärke | 400 g | 15 | 60 g | 0 g |
| Weizenmehl | 800 g | 15 | 120 g | 0 g |
| Zucker | 1000 g | 0 | 0 g | 1000 g |
| Vollei | 800 g | 80 | 640 g | 0 g |
| Wasser | 300 g | 100 | 300 g | 0 g |
| Gesamtgewicht | (1) Masse | | (2) Wasser | (3) Zucker |
| | 4200 g | | 1300 g | 1000 g |

Zucker - Gesamtgewicht (3)

+ restlicher, gewichtsmäßiger Wasser - Anteil im Kuchen (16)

= Zucker/Wasser - Gesamtgewichtsanteil im Kuchen vor dem Verpacken (19)

Rezeptbeispiel: 1000 g (3)

+ 870 g (16)

= 1870 g Zucker/Wasser - Gesamtgewichtsanteil im Kuchen vor dem Verpacken (19)

Berechnung: (20) Zucker-Anteil zum Zucker-Wasser-Gesamtgewicht im Kuchen vor dem Verpacken in Prozent

$$\frac{\text{Zucker-Gesamtgewicht (3) x 100}}{\text{Zucker/Wasser-Gesamtgewichtsanteil im Kuchen (19)}} = \text{Zucker - Anteil zum Zucker - Wasser - Gesamtgewicht in \% (20)}$$

Rezeptbeispiel: $\frac{1000\ (3)\ x\ 100}{1870\ (19)} = 53{,}48\ \%$ Zucker - Anteil zum Zucker - Wasser - Gesamtgewicht (20)

Berechnung: (21) Wasser-Anteil zum Zucker-Wasser-Gesamtgewicht im Kuchen vor dem Verpacken in Prozent

$$\frac{\text{restlicher, gewichtsmäßiger Wasser-Anteil(16) x 100}}{\text{Zucker/Wasser-Gesamtgewichtsanteil im Kuchen (19)}} = \text{Wasser - Anteil zum Zucker -Wasser - Gesamtgewicht in \% (21)}$$

Rezeptbeispiel: $\frac{870\ (16)\ x\ 100}{1870\ (19)} = 46{,}52\ \%$ Wasser - Anteil zum Zucker - Wasser - Gesamtgewicht (21)

<u>Berechnung: (22) Zucker im Verhältnis zu 100 Teilen Wasser im Kuchen vor dem Verpacken</u>

$$\frac{\text{Zucker-Anteil zum Zucker-Wasser-Gesamtgewicht in \% (20) x 100}}{\text{Wasser-Anteil zum Zucker-Wasser-Gesamtgewicht in \% (21)}} = \frac{\text{Zucker im Verhältnis zu}}{\text{100 Teilen Wasser (22)}}$$

Rezeptbeispiel: $\frac{53,52\ (20)\ \text{x}\ 100}{46,52\ (21)} = 115{,}05$ Teile Zucker zu 100 Teilen Wasser (22)

<u>Berechnung: (23) 100 Teile Wasser im Verhältnis zu Teilen Zucker im Kuchen vor dem Verpacken</u>

$$\frac{(21)\ \text{x}\ (22)}{(20)} = \text{Wasser im Verhältnis zu 100 Teilen Zucker (23)}$$

<u>Legende</u>

(20) Zucker - Anteil zum Zucker - Wasser - Gesamtgewicht in Prozent

(21) Wasser - Anteil zum Zucker - Wasser - Gesamtgewicht in Prozent

(22) Zucker im Verhältnis zu 100 Teilen Wasser

Rezeptbeispiel: $\frac{46,52\ (21)\ \text{x}\ 115,05\ (22)}{53,52\ (20)} = 100$ Teile Wasser zu Teilen Zucker (23)

<u>Berechnung: (24) Zucker-Wasser-Gesamtmenge in Teilen im Kuchen vor dem Verpacken</u>

Zucker im Verhältnis zu 100 Teilen Wasser (22)

+ 100 Teile Wasser im Verhältnis zu Teilen Zucker (23)

= Zucker - Wasser - Gesamtmenge in Teilen (24)

Rezeptbeispiel:    115 Teile Zucker (22)

+ 100 Teile Wasser (23)

= 215 Teile (24)

<u>Berechnung: (25) des $a_w$-Wertes</u>

Aus dem Verhältnis von 115 Teilen Zucker und 100 Teilen Wasser errechnet sich der $a_w$-Wert wie folgt:

$$(25)\ a_w = \frac{100}{115} = 0{,}87$$

Die für die Technologie der Methode wichtigsten Erkenntnisse ergeben sich sich aus der Berechnung des $a_w$-Wertes. Aus der Verhältniszahl von z.B. 100 Teilen Wasser zu 115 Teilen Zucker läßt sich nun die Wasseraktivität im Kuchen berechnen. Und zwar nach folgender Formel:

$$a_w = \frac{100}{115} = 0,8695$$

Mit dem durch das beschriebene Verfahren ermittelten Zahlenverhältnis Wasser/Zucker kann in der nachfolgenden Tabelle die zu erwartende Wasseraktivität im Kuchen vor dem Verpacken (12) entnommen werden.

Bei einer Überschreitung der Wasseraktivität von 0,87 ist mit einer Schimmelpilzbildung im bzw. auf dem Kuchen zu rechnen. In diesem Falle muß durch eine Änderung des Zucker-Anteils zum Wasser-Anteil versucht werden, den $a_w$-Wert weiter abzusenken.

Bei Unterschreiten einer Verhältniszahl von 100 Teilen Wasser zu 115 Teilen Zucker ist also mit einer Schimmelpilzbildung im Kuchen zu rechnen. Wie beschrieben muß durch eine Änderung des Zucker-Anteils und des Wasser-Anteils versucht werden, bei einem Verhältnis von 100 Teilen Wasser den Zucker - Anteil möglichst weit über 115 Teile zu erhöhen.

Änderungen im Wasser-Zucker-Verhältnis können wie folgt relativ einfach vorgenommen werden:

1. Erhöhung der Zuckermenge
2. Verringerung der Wassermenge.

Wenn rezeptmäßig die Wassermenge nicht weiter reduzierbar ist, d.h. wenn außer der Eimenge kein Wasser mehr vorhanden ist, so ist die ausschließliche Alternative die Erhöhung des Zucker-Anteils.

3. Eine Erhöhung der Zuckermenge bewirkt auch einen geringeren Wasserverlust beim Ausbacken.

<u>Aufstellung von Werten zur Berechnung des Wasser-Zucker-Verhältnisses in Backwaren und Ermittlung der Wasseraktivität ($a_w$)</u>

Tabelle: Wasseranteil zu Zuckeranteil, mengenmäßig und prozentual

| <u>WASSER</u> | | <u>ZUCKER</u> | | | |
|---|---|---|---|---|---|
| <u>Teile</u> | <u>Prozent</u> | <u>Teile</u> | <u>Prozent</u> | <u>Gesamtmenge Wasser u. Zucker in Teilen</u> | <u>zu erwartende Wasseraktivität</u> |
| 100 | 58,82 | 70 | 41,18 | 170 | 1,43 |
| 100 | 57,14 | 75 | 42,86 | 175 | 1,33 |
| 100 | 55,56 | 80 | 44,44 | 180 | 1,25 |
| 100 | 54,05 | 85 | 45,95 | 185 | 1,18 |
| 100 | 52,63 | 90 | 47,37 | 190 | 1,11 |
| 100 | 51,28 | 95 | 48,72 | 195 | 1,05 |
| 100 | 50,00 | 100 | 50,00 | 200 | 1,00 |
| 100 | 48,78 | 105 | 51,22 | 205 | 0,95 |
| 100 | 47,62 | 110 | 52,38 | 210 | 0,91 |
| 100 | 46,51 | 115 | 53,49 | 215 | 0,87 |
| 100 | 45,45 | 120 | 54,55 | 220 | 0,83 |
| 100 | 44,44 | 125 | 55,56 | 225 | 0,80 |
| 100 | 43,48 | 130 | 56,52 | 230 | 0,77 |
| 100 | 42,55 | 135 | 57,45 | 235 | 0,74 |
| 100 | 41,67 | 140 | 58,33 | 240 | 0,71 |
| 100 | 40,82 | 145 | 59,18 | 245 | 0,69 |
| 100 | 40,00 | 150 | 60,00 | 250 | 0,67 |
| 100 | 39,22 | 155 | 60,78 | 255 | 0,65 |
| 100 | 38,46 | 160 | 61,54 | 260 | 0,63 |

unzureichend

erfindungsgemäß

Rezeptbeispiel 2

Anleitung zur Berechnung des Wasser - Zucker - Verhältnisses in Backwaren

Berechnung des Rezeptes: 2

| Zutaten/ Zusatzstoffe | Gewichts-Anteil Zutaten/Zusatzstoffe | Wasser-Anteil in % | Wasser- gewicht | Zucker- gewicht |
|---|---|---|---|---|
| Margarine | 900 g | 20 | 180 g | 0 g |
| Weizenstärke | 400 g | 15 | 60 g | 0 g |
| Weizenmehl | 800 g | 15 | 120 g | 0 g |
| Zucker | 1000 g | 0 | 0 g | 1100 g |
| Vollei | 800 g | 80 | 640 g | 0 g |
| Wasser | 300 g | 100 | 300 g | 0 g |
| Feuchtigkeits- stabilisator | 10 g | 10 | 1 g | 0 g |
| Gesamtgewicht | (1) Masse 4310 g | | (2) Wasser 1301 g | (3) Zucker 1100 g |

Prozent-Anteil von Wasser im Massen-Gesamtgewicht (1) vor dem Backen (4)

$$\frac{(2)1301 \times 100}{(1)\ 4310} = (4)\ 30,19\ \%$$

Prozent-Anteil von Zucker im Massen-Gesamtgewicht (1) vor dem Backen (5)

$$\frac{(3)\ 1100 \times 100}{(1)\ 4310} = (5)\ 25,52\ \%$$

Legende

(1) Massen-Gesamtgewicht
(2) Wasser-Gesamtgewicht
(3) Zucker-Gesamtgewicht
(4) Prozent-Anteil von Wasser im (1) Massen - Gesamtgewicht vor dem Backen
(5) Prozent-Anteil von Zucker im (1) Massen-Gesamtgewicht vor dem Backen

Wasserverluste durch Backen, Kühlen und Lagern

Backverlust in Gramm (6)

$$\begin{aligned}
&\ \ \ \ (1)\ 4310 \\
&- (8)\ 3935 \quad \text{(durch Verwiegen festgestellt)} \\
&= (6)\ \ \ 375
\end{aligned}$$

Backverlust in Prozent (7)

$$\frac{(6)\ 375 \times 100}{(1)\ 4310} = (7)\ 8{,}70\ \%$$

Auskühlverlust in Gramm (9)

$$(8)\quad 3935$$
$$-\ (12)\ 3868{,}5 \quad \text{(durch Verwiegen festgestellt)}$$
$$=\ (9)\qquad 66{,}5$$

Auskühlverlust in Prozent (10)

$$\frac{(9)\ 66{,}5 \times 100}{(8)\ 3935} = (10)\ 1{,}69\ \%$$

Massen-Gesamtgewichtsverlust in Gramm (11)

$$(6)\ 375$$
$$+\quad (9)\quad 66{,}5$$
$$=\ (11)\ 441{,}5$$

Kuchen-Gewicht vor dem Verpacken in Gramm (12)

$$(1)\quad 4310$$
$$-\ (11)\quad 441{,}5$$
$$=\ (12)\ 3868{,}5$$

Massen-Gesamtgewichtsverlust in Prozent (13)

$$\frac{(11)\ 441{,}5 \times 100}{(12)\ 3868{,}5} = (13)\ 11{,}41\ \%$$

Wasser-Gesamtgewichtsverlust in Prozent (14)

$$\frac{(11)\ 441{,}5 \times 100}{(2)\ 1301} = (14)\ 33{,}94\ \%$$

Legende

(1) Massen-Gesamtgewicht
(2) Wasser-Gesamtgewicht
(6) Backverlust in Gramm
(7) Backverlust in Prozent
(8) Kuchen-Gewicht nach dem Backvorgang (festgestellt nach dem Verlassen des Ofens)
(9) Auskühlverlust in Gramm
(10) Auskühlverlust in Prozent
(11) Massen-Gesamtgewichtsverlust = Wasserverlust
(12) Kuchen-Gewicht vor dem Verpacken
(13) Massen-Gesamtgewichtsverlust in Prozent
(14) Wasser-Gesamtgewichtsverlust in Prozent

Wasser und Zucker im Kuchen vor dem Verpacken in Gewichten, Prozenten, Teilen, Verhältnissen und a_w-Werten

restlicher, gewichtsmäßiger Wasser-Anteil im Kuchen (16)

$$\begin{array}{rl} (2) & 1301 \\ - (11) & 441,5 \\ \hline = (16) & 859,5 \end{array}$$

Wasser-Anteil im Kuchen in Prozent (17)

$$\frac{(16)\ 859,5 \times 100}{(12)\ 3868,5} = (17)\ 22,22\ \%$$

Zucker-Anteil im Kuchen in Prozent (18)

$$\frac{(3)\ 1100 \times 100}{(12)\ 3868,5} = (18)\ 28,43\ \%$$

Zucker-Wasser-Gesamtgewicht im Kuchen (19)

$$\begin{array}{rl} (3) & 1100 \\ + (16) & 859,5 \\ \hline = (19) & 1959,5 \end{array}$$

Zucker-Anteil zum Zucker-Wasser-Gesamtgewicht im Kuchen in Prozent (20)

$$\frac{(3)\ 1100 \times 100}{(19)\ 1959,5} = (20)\ 56,14\ \%$$

Wasser-Anteil zum Zucker-Wasser-Gesamtgewicht in Prozent (21)

$$\frac{(16)\ 859,5 \times 100}{(19)\ 1959,5} = (21)\ 43,86\ \%$$

Teile Zucker im Verhältnis zu 100 Teilen Wasser (22)

$$\frac{(20)\ 56,14 \times 100}{(21)\ 43,86} = (22)\ 128$$

100 Teile Wasser im Verhältnis zu Teilen Zucker (23)

$$\frac{(21)\ 43,86 \times (22)\ 128}{(20)\ 56,14} = (23)\ 100\ \text{(muß immer 100 Teile ergeben)}$$

Zucker-Wasser-Gesamtmenge in Teilen (24)

$$\begin{array}{rl} (22) & 128 \\ + (23) & 100 \\ \hline = (24) & 228 \end{array}$$

$a_w$ Wert (25)

$$\text{Das entspricht einem } a_w - \text{Wert von } \frac{100 \ (23)}{128 \ (22)} = 0{,}78$$

Legende

(2) Wasser-Gesamtgewicht
(3) Zucker-Gesamtgewicht
(11) Massen-Gesamtgewicht = Wasserverlust
(12) Kuchen-Gewicht vor dem Verpacken
(16) restlicher, gewichtsmäßiger Wasser-Anteil im Kuchen
(17) Wasser-Anteil im Kuchen in Prozent
(18) Zucker-Anteil im Kuchen in Prozent
(19) Zucker-Wasser-Gesamtgewicht im Kuchen
(20) Zucker-Anteil zum Zucker-Wasser-Gesamtgewicht im Kuchen in Prozent
(21) Wasser-Anteil zum Zucker-Wasser-Gesamtgewicht im Kuchen in Prozent
(22) Teile Zucker im Verhältnis zu 100 Teilen Wasser
(23) 100 Teile Wasser im Verhältnis zu Teilen Zucker
(24) Wasser-Zucker-Gesamtmenge in Teilen
(25) $a_w$ - Wert

Rezeptbeispiel 3

Anleitung zur Berechnung des Wasser - Zucker - Verhältnisses in Backwaren

Berechnung des Rezeptes: 3

| Zutaten/ Zusatzstoffe | Gewichts-Anteil Zutaten/Zusatzstoffe | Wasser-Anteil in % | Wasser- gewicht | Zucker- gewicht |
|---|---|---|---|---|
| Margarine | 900 g | 20 | 180 g | 0 g |
| Weizenstärke | 400 g | 15 | 60 g | 0 g |
| Weizenmehl | 800 g | 15 | 120 g | 0 g |
| Zucker | 1100 g | 0 | 0 g | 1100 g |
| Vollei | 800 g | 80 | 640 g | 0 g |
| Wasser | 200 g | 100 | 200 g | 0 g |
| Feuchtigkeits- stabilisator | 10 g | 10 | 1 g | 0 g |
| Gesamtgewicht | (1) Masse 4210 g | | (2) Wasser 1201 g | (3) Zucker 1100 g |

Prozent-Anteil von Wasser im Massen-Gesamtgewicht (1) vor dem Backen (4)

$$\frac{(2) \ 1201 \times 100}{(1) \ 4210} = (4) \ 28{,}53 \ \%$$

Prozent-Anteil von Zucker im Massen-Gesamtgewicht (1) vor dem Backen (5)

$$\frac{(3)\ 1100\ x\ 100}{(1)\ 4210} = (5)\ 26,13\ \%$$

Legende

(1) Massen-Gesamtgewicht
(2) Wasser-Gesamtgewicht
(3) Zucker-Gesamtgewicht
(4) Prozent-Anteil von Wasser im (1) Massen-Gesamtgewicht vor dem Backen
(5) Prozent-Anteil von Zucker im (1) Massen-Gesamtgewicht vor dem Backen

Wasserverluste durch Backen, Kühlen und Lagern

Backverlust in Gramm (6)

$$
\begin{array}{r}
(1)\ 4210 \\
-\ (8)\ 3844 \quad \text{(durch Verwiegen festgestellt)} \\
\hline
=\ (6)\ \ \ 366
\end{array}
$$

Backverlust in Prozent (7)

$$\frac{(6)\ 366\ x\ 100}{(1)\ 4210} = (7)\ 8,69\ \%$$

Auskühlverlust in Gramm (9)

$$
\begin{array}{r}
(8)\ 3844 \\
-\ (12)\ 3779 \quad \text{(durch Verwiegen festgestellt)} \\
\hline
=\ (9)\ \ \ \ 65
\end{array}
$$

Auskühlverlust in Prozent (10)

$$\frac{(9)\ 65\ x\ 100}{(8)\ 3844} = (10)\ 1,69\ \%$$

Massen-Gesamtgewichtsverlust in Gramm (11)

$$
\begin{array}{r}
(6)\ 366 \\
+\ \ (9)\ \ 65 \\
\hline
=\ (11)\ 431
\end{array}
$$

Kuchen-Gewicht vor dem Verpacken in Gramm (12)

$$
\begin{array}{r}
(1)\ \ 4210 \\
-\ (11)\ \ \ \ 431 \\
\hline
=\ (12)\ \ 3779
\end{array}
$$

Massen-Gesamtgewichtsverlust in Prozent (13)

17

$$\frac{(11)\ 431 \times 100}{(12)\ 3779} = (13)\ 11{,}41\ \%$$

Wasser-Gesamtgewichtsverlust in Prozent (14)

$$\frac{(11)\ 431 \times 100}{(2)\ 1201} = (14)\ 35{,}89\ \%$$

Legende

(1) Massen-Gesamtgewicht
(2) Wasser-Gesamtgewicht
(6) Backverlust in Gramm
(7) Backverlust in Prozent
(8) Kuchen-Gewicht nach dem Backvorgang (festgestellt nach dem Verlassen des Ofens)
(9) Auskühlverlust in Gramm
(10) Auskühlverlust in Prozent
(11) Massen-Gesamtgewichtsverlust = Wasserverlust
(12) Kuchen-Gewicht vor dem Verpacken
(13) Massen-Gesamtgewichtsverlust in Prozent
(14) Wasser-Gesamtgewichtsverlust in Prozent

Wasser und Zucker im Kuchen vor dem Verpacken in Gewichten, Prozenten, Teilen, Verhältnissen und $a_w$-Werten

restlicher, gewichtsmäßiger Wasser-Anteil im Kuchen (16)

$$\begin{array}{rr} (2) & 1201 \\ - \ (11) & 431 \\ \hline = (16) & 770 \end{array}$$

Wasser-Anteil im Kuchen in Prozent (17)

$$\frac{(16)\ 770 \times 100}{(12)\ 3779} = (17)\ 20{,}38\ \%$$

Zucker-Anteil im Kuchen in Prozent (18)

$$\frac{(3)\ 1100 \times 100}{(12)\ 3779} = (18)\ 29{,}11\ \%$$

Zucker-Wasser-Gesamtgewicht im Kuchen (19)

$$\begin{array}{rr} (3) & 1100 \\ + \ (16) & 770 \\ \hline = (19) & 1870 \end{array}$$

Zucker-Anteil zum Zucker-Wasser-Gesamtgewicht im Kuchen in Prozent (20)

$$\frac{(3)\ 1100 \times 100}{(19)\ 1870} = (20)\ 58{,}82\ \%$$

Wasser-Anteil zum Zucker-Wasser-Gesamtgewicht im Kuchen in Prozent (21)

$$\frac{(16)\ 770 \times 100}{(19)\ 1870} = (21)\ 41,18\ \%$$

Teile Zucker im Verhältnis zu 100 Teilen Wasser (22)

$$\frac{(20)\ 58,82 \times 100}{(21)\ 41,18} = (22)\ 143$$

100 Teile Wasser im Verhältnis zu Teilen Zucker (23)

$$\frac{(21)\ 41,18 \times (22)\ 143}{(20)\ 58,82} = (23)\ 100\ (\text{muß immer 100 Teile ergeben})$$

Zucker-Wasser-Gesamtmenge in Teilen (24)

$$\begin{aligned}
&(22)\ 143\\
+\ &(23)\ 100\\
=\ &(24)\ 243
\end{aligned}$$

$a_w$ - Wert (25)

Das entspricht einem $a_w$ - Wert von $\dfrac{100\ (23)}{143\ (22)} = (25)\ 0,69$

<u>Legende</u>

(2) Wasser-Gesamtgewicht
(3) Zucker-Gesamtgewicht
(11) Massen-Gesamtgewicht = Wasserverlust
(12) Kuchen-Gewicht <u>vor dem Verpacken</u>
(16) restlicher, gewichtsmäßiger Wasser - Anteil im Kuchen
(17) Wasser-Anteil im Kuchen in Prozent
(18) Zucker-Anteil im Kuchen in Prozent
(19) Zucker-Wasser-Gesamtgewicht im Kuchen
(20) Zucker-Anteil zum Zucker-Wasser-Gesamtgewicht im Kuchen in Prozent
(21) Wasser-Anteil zum Zucker-Wasser-Gesamtgewicht im Kuchen in Prozent
(22) Teile Zucker im Verhältnis zu 100 Teilen Wasser
(23) 100 Teile Wasser im Verhältnis zu Teilen Zucker
(24) Wasser-Zucker-Gesamtmenge in Teilen
(25) $a_w$-Wert

<u>Rezeptbeispiel 4</u>

<u>Anleitung zur Berechnung des Wasser-Zucker-Verhältnisses in Backwaren</u>

Berechnung des Rezeptes: 4

| Zutaten/ Zusatzstoffe | Gewichts-Anteil Zutaten/Zusatzstoffe | Wasser-Anteil in % | Wasser-gewicht | Zucker-gewicht |
|---|---|---|---|---|
| Margarine | 900 g | 20 | 180 g | 0 g |
| Weizenstärke | 400 g | 15 | 60 g | 0 g |
| Weizenmehl | 800 g | 15 | 120 g | 0 g |
| Zucker | 1150 g | 0 | 0 g | 1150 g |
| Vollei | 800 g | 80 | 640 g | 0 g |
| Wasser | 150 g | 100 | 150 g | 0 g |
| Feuchtigkeits-stabilisator | 10 g | 10 | 1 g | 0 g |
| Gesamtgewicht | (1) Masse 4210 g ======== | | (2) Wasser 1151 g ======== | (3) Zucker 1150 g ======== |

Legende

(1) Massen-Gesamtgewicht
(2) Wasser-Gesamtgewicht
(3) Zucker-Gesamtgewicht

Prozent-Anteil von Wasser im Massen-Gesamtgewicht (1) vor dem Backen (4)

$$\frac{(2)\ 1151 \times 100}{(1)\ 4210} = (4)\ 27{,}34\ \%$$

Prozent-Anteil von Zucker im Massen-Gesamtgewicht (1) vor dem Backen (5)

$$\frac{(3)\ 1150 \times 100}{(1)\ 4210} = (5)\ 27{,}32\ \%$$

Legende

(1) Massen-Gesamtgewicht
(2) Wasser-Gesamtgewicht
(3) Zucker-Gesamtgewicht
(4) Prozent-Anteil von Wasser im (1) Massen-Gesamtgewicht vor dem Backen
(5) Prozent-Anteil von Zucker im (1) Massen-Gesamtgewicht vor dem Backen

Wasserverluste durch Backen, Kühlen und Lagern

Backverlust in Gramm (6)

$$
\begin{aligned}
& (1)\quad 4210 \\
- \ & (8)\quad 3844 \quad \text{(durch Verwiegen festgestellt)} \\
= \ & (6)\quad\ 366
\end{aligned}
$$

Backverlust in Prozent (7)

$$\frac{(6)\ 366 \times 100}{(1)\ 4210} = (7)\ 8{,}69\ \%$$

Auskühlverlust in Gramm (9)

$$(8)\quad 3844$$
$$-\ (12)\quad 3779\quad (\text{durch Verwiegen festgestellt})$$
$$=\ (9)\qquad 65$$

Auskühlverlust in Prozent (10)

$$\frac{(9)\ 65 \times 100}{(8)\ 3844} = (10)\ 1{,}69\ \%$$

Massen-Gesamtgewichtsverlust in Gramm (11)

$$(6)\ 366$$
$$+\quad (9)\ 65$$
$$=\ (11)\ 431$$

Kuchen-Gewicht vor dem Verpacken in Gramm (12)

$$(1)\quad 4210$$
$$-\ (11)\qquad 431$$
$$=\ (12)\quad 3779$$

Massen-Gesamtgewichtsverlust in Prozent (13)

$$\frac{(11)\ 431 \times 100}{(12)\ 3779} = (13)\ 11{,}41\ \%$$

Wasser-Gesamtgewichtsverlust in Prozent (14)

$$\frac{(11)\ 431 \times 100}{(2)\ 1151} = (14)\ 37{,}45\ \%$$

Legende

(1) Massen-Gesamtgewicht
(2) Wasser-Gesamtgewicht
(6) Backverlust in Gramm
(7) Backverlust in Prozent
(8) Kuchen-Gewicht nach dem Backvorgang (festgestellt nach dem Verlassen des Ofens)
(9) Auskühlverlust in Gramm
(10) Auskühlverlust in Prozent
(11) Massen-Gesamtgewichtsverlust = Wasserverlust
(12) Kuchen-Gewicht vor dem Verpacken
(13) Massen-Gesamtgewichtsverlust in Prozent
(14) Wasser-Gesamtgewichtsverlust in Prozent

Wasser und Zucker im Kuchen vor dem Verpacken in Gewichten, Prozenten, Teilen, Verhältnissen und $a_w$-Werten

restlicher, gewichtsmäßiger Wasser-Anteil im Kuchen (16)

$$
\begin{array}{r}
(2) \quad 1151 \\
- \ (11) \quad 431 \\
\hline
= (16) \quad 720
\end{array}
$$

Wasser-Anteil im Kuchen in Prozent (17)

$$
\frac{(16) \ 720 \times 100}{(12) \ 3779} = (17) \quad 19,05 \ \%
$$

Zucker-Anteil im Kuchen in Prozent (18)

$$
\frac{(3) \ 1150 \times 100}{(12) \ 3779} = (18) \quad 30,43 \ \%
$$

Zucker-Wasser-Gesamtgewicht im Kuchen (19)

$$
\begin{array}{r}
(3) \quad 1150 \\
+ \ (16) \quad 720 \\
\hline
= (19) \ 1870
\end{array}
$$

Zucker-Anteil zum Zucker-Wasser-Gesamtgewicht im Kuchen in Prozent (20)

$$
\frac{(3) \ 1150 \times 100}{(19) \ 1870} = (20) \quad 61,50 \ \%
$$

Wasser-Anteil zum Zucker-Wasser-Gesamtgewicht im Kuchen in Prozent (21)

$$
\frac{(16) \ 720 \times 100}{(19) \ 1870} = (21) \quad 38,50 \ \%
$$

Teile Zucker im Verhältnis zu 100 Teilen Wasser (22)

$$
\frac{(20) \ 61,50 \times 100}{(21) \ 38,50} = (22) \quad 160
$$

100 Teile Wasser im Verhältnis zu Teilen Zucker (23)

$$
\frac{(21) \ 38,50 \times (22) \ 160}{(20) \ 61,50} = (23) \quad 100 \quad (\text{muß immer 100 Teile ergeben})
$$

Zucker-Wasser-Gesamtmenge in Teilen (24)

$$
\begin{array}{r}
(22) \quad 160 \\
+ \ (23) \quad 100 \\
\hline
= (24) \quad 260
\end{array}
$$

$a_w$-Wert (25)

$$\text{Das entspricht einem } a_w - \text{Wert von } \frac{100\ (23)}{160\ (22)} = 0{,}63$$

Legende

(2) Wasser-Gesamtgewicht
(3) Zucker-Gesamtgewicht
(11) Massen-Gesamtgewicht = Wasserverlust
(12) Kuchen-Gewicht vor dem Verpacken
(16) restlicher, gewichtsmäßiger Wasser-Anteil im Kuchen
(17) Wasser-Anteil im Kuchen in Prozent
(18) Zucker-Anteil im Kuchen in Prozent
(19) Zucker-Wasser-Gesamtgewicht im Kuchen
(20) Zucker-Anteil zum Zucker-Wasser-Gesamtgewicht im Kuchen in Prozent
(21) Wasser-Anteil zum Zucker-Wasser-Gesamtgewicht in Prozent
(22) Teile Zucker im Verhältnis zu 100 Teilen Wasser
(23) 100 Teile Wasser im Verhältnis zu Teilen Zucker
(24) Wasser-Zucker-Gesamtmenge in Teilen
(25) $a_w$-Wert

## Patentansprüche

1. Verfahren zum Herstellen von Kuchenmassen für haltbare süße Backwaren unter Verwendung von Weizenmehl, -stärke, Margarine und/oder Butter, Vollei sowie Zucker und Wasser, bei dem gegebenenfalls Backemulgatoren, Backpulver, Aromastoffe, Salz etc. in unterschiedlichen Mengenverhältnissen und Kombinationsvarianten eingesetzt werden und anschließend die entstandene Masse gründlich vermischt und/oder aufgeschlagen und/oder gerührt wird, dadurch gekennzeichnet, daß unter Verzicht auf jegliche Konservierungsstoffe das Verhältnis von Wasser zu Zucker zueinander in der ausgebackenen und abgekühlten Ware in folgenden Wertepaaren festgelegt wird:

| % Wasser | % Zucker | Wasseraktivität |
|---|---|---|
| 46,51 | 53,49 | 0,87 |
| 45,45 | 54,55 | 0,83 |
| 44,44 | 55,56 | 0,80 |
| 43,48 | 56,52 | 0,77 |
| 42,55 | 57,45 | 0,74 |
| 41,67 | 58,33 | 0,71 |
| 40,82 | 59,18 | 0,69 |
| 38,46 | 61,54 | 0,63 |

und wobei der gewünschte $a_w$-Wert zwischen 0,63 und 0,87 der ausgebackenen und abgekühlten Ware durch Erfassung aller Wasser- und Zuckerteile in sämtlichen Ausgangsbestandteilen festgelegt wird.

2. Verfahren nach Anspruch 1, dadurch gekennzeichnet, daß der Wasseranteil bezogen auf 100 Teile auf 41,67% und der Zuckeranteil entsprechend dazu auf 58,33% eingestellt wird, entsprechend einem $a_w$-Wert von 0,71.

3. Verfahren nach Anspruch 1, dadurch gekennzeichnet, daß zusätzlich 3–10% Wasser-Zucker-Gel (bezogen auf das Gesamtgewicht der Kuchenmassen) eingesetzt werden unter Verwendung eines Feuchtigkeitsstabilisators auf Basis modifizierter Stärke und natürlicher Stabilisatoren, wodurch eine Erhöhung des Wasseranteils eintritt.

## Claims

1. Method for the production of cake pastes for keepable sweet flour confectionery, with utilization of wheat flour, wheat starch, margarine and/or butter, whole egg as well as sugar and water, with possible addition of baking emulsifiers, baking powder, aromatizers, salt etc. in different quantities and combinations, the thus obtained pastes being subsequently mixed thoroughly and/or whipped and/or stirred, characterized by the fact that, renouncing all kind of preserving agents, the relation of water to sugar is determined in the following pairs of value for the baked and cooled confectionery:

| % water | % sugar | % activity |
|---------|---------|-----------|
| 46,51 | 53,49 | 0,87 |
| 45,45 | 54,55 | 0,83 |
| 44,44 | 55,56 | 0,80 |
| 43,48 | 56,52 | 0,77 |
| 42,55 | 57,45 | 0,74 |
| 41,67 | 58,33 | 0,71 |
| 40,82 | 59,18 | 0,69 |
| 38,46 | 61,54 | 0,63 |

and whereby the desired $a_w$-value is determined between 0,63 and 0,87 of the baked and cooled confectionery by considering all the parts of water and sugar in the starting compounds.

2. Method as per claim 1, characterized by the fact that the water content, referred to 100 parts, is adjusted to 41,67% and the sugar content accordingly to 58,33%, corresponding to an $a_w$ value of 0,71.

3. Method as per claim 1, characterized by the fact that additionally 3–10 % of water-sugar-gel (referred to the total weight of the cake pastes) is employed, using a stabilizer of moisture on basis of modified starch and natural stabilizers, increasing thus the water content.

## Revendications

1. Procédé de fabrication d'appareils à gâteaux pour des pâtisseries sucrées de longue conservation, utilisant de la farine de blé, de l'amidon de blé, de la margarine et/ou du beurre, des œufs entiers ainsi que du sucre et de l'eau, dans lequel on emploie éventuellement des émulsifiants pour pâtisseries, de la levure chimique, des substances aromatiques, du sel etc. selon différents rapports de quantité et variantes combinées et dans lequel on mélange ensuite intimement l'appareil obtenu, et/ou on le bat, et/ou on le remue, caractérisé en ce que, en reconçant à l'utilisation de tout agent conservateur, le rapport eau/sucre dans la marchandise finie et refroidie est fixé selon les paires de valeurs suivantes:

| % d'eau | % de sucre | activité d'eau |
|---------|-----------|----------------|
| 46,51 | 53,49 | 0,87 |
| 45,45 | 54,55 | 0,83 |
| 44,44 | 55,56 | 0,80 |
| 43,48 | 56,52 | 0,77 |
| 42,55 | 57,45 | 0,74 |
| 41,67 | 58,33 | 0,71 |
| 40,82 | 59,18 | 0,69 |
| 38,46 | 61,54 | 0,63 |

et la valeur $a_w$ souhaitée entre 0,63 et 0,87 de la marchandise finie et refroidie est fixée par la détection de toutes les parts d'eau et de sucre dans tous les ingrédients de départ.

2. Procédé selon la revendication 1, caractérisé en ce que le pourcentage d'eau, par rapport à 100 parts, est réglé à 41,67% et le pourcentage de sucre de manière correspondante à 58,33%, ce qui correspond à une valeur $a_w$ de 0,71.

3. Procédé selon la revendication 1, caractérisé en ce que l'on emploie en plus 3 à 10% de sel/sucre/eau (par rapport au poids total des appareils à gâteaux) en utilisant un stabilisateur d'humidité sur la base d'amidon modifié et de stabilisateurs naturels, ce qui provoque un accroissement du pourcentage d'eau.